Europäisches Patentamt

European Patent Office

Office européen des brevets

(11) Veröffentlichungsnummer: **0 066 654**
**B1**

(19)

(12) # EUROPÄISCHE PATENTSCHRIFT

(45) Veröffentlichungstag der Patentschrift:
08.05.85

(51) Int. Cl.⁴: **H 04 Q 11/04, H 04 Q 3/54**

(21) Anmeldenummer: 81109270.9

(22) Anmeldetag: 29.10.81

(54) Schaltungsanordnung für zentralgesteuerte Zeitmultiplex-Fernmeldevermittlungsanlagen, insbesondere PCM-Fernsprechvermittlungsanlagen, mit einem Koppelfeld, mit Anschlusseinrichtungen und mit einem zentralen Steuerwerk und den Anschlussgruppen zugeordneten dezentralen Steuereinrichtungen.

(30) Priorität: 04.06.81 DE 3122172

(43) Veröffentlichungstag der Anmeldung:
15.12.82 Patentblatt 82/50

(45) Bekanntmachung des Hinweises auf die Patenterteilung:
08.05.85 Patentblatt 85/19

(84) Benannte Vertragsstaaten:
AT CH FR GB IT LI NL SE

(56) Entgegenhaltungen:
EP - A - 0 006 132
EP - A - 0 056 086
EP - A - 0 057 758
EP - A - 0 058 750
EP - A - 0 059 242
DE - A - 1 910 974
DE - A - 2 907 867

(73) Patentinhaber: Siemens Aktiengesellschaft, Berlin und München Wittelsbacherplatz 2, D-8000 München 2 (DE)

(72) Erfinder: Neufang, Karlheinz, Nebelhornstrasse 77 a, D-8000 München 21 (DE)

## Beschreibung

In Fernmeldeanlagen dienen Schaltkennzeichen zur Steuerung von Schaltvorgängen. Mit dem Problem der Übertragung solcher Schaltkennzeichen bei Zeitmultiplexfernmeldeanlagen befaßt sich bereits die DE-PS 1 910 974.

Solche Schaltkennzeichen treten in einer konventionellen Fernmeldeanlage, insbesondere Fernsprechvermittlungsanlage, üblicherweise auf deren einzelnen Leitungen als impulsförmig oder auch länger andauernde Gleichstromzeichen in der Weise auf, daß die einzelnen Leitungsadern (a, b gegebenenfalls c) einer solchen Leitung in verschiedenen Kombinationen bestimmte Potentiale aufweisen; dabei sind für jede Leitungsader zwei mögliche Potentialzustände vorgesehen. So werden z. B. innerhalb einer konventionellen Vermittlungsanlage Nummernwahlschaltkennzeichen in der Form über die a-Ader weitergeleitet, daß im Rhythmus der Nummernschalterimpulse Erdpotential an die a-Ader angelegt wird; das sogenannte Schlußzeichen, das in der Vermittlungsstelle erzeugt wird, wenn ein gerufener Teilnehmer bei Gesprächsende den Handapparat auflegt, erscheint in der Form »Spannung an b-Ader und Erde an a-Ader«. Sind solche Schaltkennzeichen zwischen mehr oder weniger entfernt voneinander liegenden, ständig oder von Fall zu Fall miteinander verbundenen Stellen einer Fernmeldeanlage zu übertragen, so findet gegebenenfalls eine Umsetzung der Schaltkennzeichen in eine für eine solche Übertragung geeignete Darstellungsform statt.

In konventionellen Fernmeldeanlagen handelt es sich bei den Übertragungskanälen, in denen solche Schaltkennzeichen übertragen werden können, im allgemeinen um räumlich voneinander getrennte Übertragungskanäle. Zunehmend sind auch Zeitmultiplex-Fernmeldeanlagen interessant geworden, d. h. Fernmeldeanlagen, bei denen die zwischen den einzelnen, gegebenenfalls von Fall zu Fall miteinander verbundenen End- oder auch Zwischenübertragungsstellen jeweils zu übertragenden Informationen Impulsfolgen aufmoduliert sind, welche zeitlich gegeneinander versetzt sind und daher durch Ineinanderschachtelung auf Zeitmultiplexleitungen zeitlich gebündelt werden können, wobei dann also die einzelnen Übertragungskanäle zeitlich voneinander getrennt sind (Zeitkanäle).

Der Erfindung liegen Zeitmultiplex-Fernmeldeanlagen zugrunde. Sie bezieht sich auf die Schaltkennzeichenübertragung. Eine solche Schaltkennzeichenübertragung kann generell jeweils in eigens hierzu reservierten Zeitelementen der Zeitfächer des für die jeweilige Verbindung bereitgestellten Zeitkanals (Verbindungs-Zeitkanal) vor sich gehen oder aber in einem hierzu in dem Pulsrahmen des PCM-Systems reservierten, für alle Verbindungs-Zeitkanäle gemeinsamen Daten-Zeitkanal. Die Erfindung basiert auf einer Schaltkennzeichenübertragung der letzteren Art.

Für eine PCM-Zeitmultiplex-Vermittlungsstelle ist durch die GB-PS 1 040 833 ein Schaltkennzeichensteuerwerk bekannt, das für die Aufnahme und die anschließende Wiedergabe solcher Schaltkennzeichen vorgesehen ist. Eine mit einer solchen Schaltkennzeichenweitergabe verbundene Steuerwerksbelastung kann aber unter Umständen relativ schnell zu einer Blockierung des Schaltkennzeichensteuerwerkes für von diesem an sich durchzuführende Verarbeitungsvorgänge mit sich bringen, so daß solche Steuerwerke an der Erfüllung ihrer eigentlichen Aufgabe, für die betreffende Vermittlungsstelle bestimmte Schaltkennzeichen aufzunehmen und selbst zu verarbeiten bzw. von der Vermittlungsstelle ausgehende Schaltkennzeichen zu erzeugen und abzusetzen, hinsichtlich eines Teiles ihrer Arbeitskapazität entzogen sind. Sie können also dieser ihrer eigentlichen Aufgabe nicht unbeeinflußt von über die betreffende Vermittlungsstelle nur zu übertragenden Schaltkennzeichen genügen, sondern unterliegen einer zusätzlichen Belastung durch die Schaltkennzeichenweitergabe.

Durch die eingangs genannte deutsche Patentschrift ist eine Schaltungsanordnung bekannt, bei der zur Entlastung solcher Schaltkennzeichensteuerwerke Signalisierungszeichen über ein außer einem Verbindungskoppelfeld zusätzlich vorgesehenes Signalkoppelfeld vermittelt werden. In diesem bekannten Falle sind die in einem gemeinsamen Signalkanal übertragenen Signalisierungszeichen jeweils von einer Zeitkanalbezeichnung begleitet, die für jedes Signalisierungszeichen die Zuordnung zu einem bestimmten Zeitkanal angibt. Bei der Durchschaltung eines Zeitkanals ist diese Zeitkanalbezeichnung maßgebend für die richtige Weitergabe der Signalisierungszeichen. Außer dem besonderen Signalkoppelfeld sind sowohl eingangsseitig als auch ausgangsseitig zusätzlich Schieberegister, Vergleicher, Kanalbezeichnungsgeneratoren und dergleichen erforderlich, die nicht nur einen besonderen Aufwand darstellen, sondern die Abwicklung eines von der Vermittlung der Nachrichtenkanäle abweichenden relativ komplizierten Verfahrens erforderlich machen.

Die Erfindung bezieht sich auf eine Schaltungsanordnung für zentralgesteuerte Zeitmultiplex-Fernmeldevermittlungsanlagen, insbesondere PCM-Fernsprechvermittlungsanlagen, mit einem mehrstufigen, Zeitmultiplex-Eingänge und Zeitmultiplex-Ausgänge aufweisenden Koppelfeld, und mit einer Mehrzahl von einem Anschluß von Zeitmultiplex-Verbindungsleitungen, Analog-Verbindungsleitungen und/oder Analog-Teilnehmerleitungen dienenden Anschlußeinrichtungen, von denen jede an einen Zeitmultiplexeingang und einen Zeitmultiplexausgang des Koppelfeldes angeschlossen ist, und mit wenigstens einem zentralen Steuerwerk und mehreren, den Anschlußeinrichtungen individuell zugeordneten dezentralen Steuereinrichtungen, die mit dem Steuerwerk über Datenkanäle in Verbindung stehen, und mit Einrichtungen zur Aussendung von über Analog-Verbindungsleitungen weiterzugebende Schaltkennzeichen, insbesondere von Gebührenzählimpulsen, die als Gleichstromsignale und/oder über zugleich mit den Nachrichtenwegen, z. B. Sprechstromkreisen, und ebenso wie diese für eine Verbindung durchgeschaltete Strompfade übertragen werden, und die bei über das Koppelfeld und jeweils eine Analog-Verbindungsleitung verlaufenden Verbindungen der dezentralen Steuereinrichtung derjenigen Anschlußgruppe zugeleitet werden, welcher die mit dieser Analog-Verbindungsleitung über das Koppelfeld verbundene Teilnehmerleitung — oder Verbindungsleitung — zugeordnet ist.

Für die Erfindung besteht die Aufgabe, für eine Schaltkennzeichenweitergabe einfachere als die bisher bekannten Möglichkeiten zu schaffen. Hierbei ist der Gesichtspunkt maßgebend, daß der Aufwand für Koppelfelder in Zeitmultiplex-Fernmeldevermittlungsanlagen nach und nach erheblich herabgesetzt werden konnte, und zwar durch Standardisierung der verwendeten Zeitlagenvielfache und Raumlagenvielfache und daß die Belastung zentraler Steuerwerke und dezentraler Steuereinrichtungen ein Problem darstellen, dem besonders vom Gesichtspunkt der erläuterten Schaltkennzeichenweitergabe wirksam zu begegnen ist.

Die Erfindung löst die ihr gestellte Aufgabe dadurch, daß bei Herstellung von Verbindungen von einer Teilnehmerleitung — oder Verbindungsleitung — über das Koppelfeld und jeweils eine Analog-Verbindungsleitung, sowie eine dieser zugeordnete verbindungsindividuelle Schalteinrichtung, z. B. Leitungsabschlußschaltung, außer einem ersten Zeitmultiplexverbindungsweg über das Koppelfeld zwischen der Teilnehmerleitung — oder Verbindungsleitung — und der verbindungsindividuellen Schalteinrichtung, der als Nachrichtenübertragungsweg über das Koppelfeld dient, davon unabhängig und zusätzlich von der dezentralen Steuereinrichtung derjenigen Anschlußgruppe, welcher die betreffende Teilnehmerleitung — oder Verbindungsleitung — angehört, zu derselben verbindungsindividuellen Schalteinrichtung ein zweiter Zeitmultiplexverbindungsweg über das Koppelfeld durchgeschaltet wird, welcher der Übertragung der Schaltkennzeichen dient.

Die Erfindung, die davon ausgeht, daß der Aufwand für Koppelfelder in Zeitmultiplex-Fernmeldevermittlungsanlagen relativ gering ist, daß aber die Belastung zentraler Steuereinrichtungen und auch der dezentralen Steuerwerke ein Problem darstellt, das aufgrund der Inanspruchnahme durch die ihnen von der Zweckbestimmung her inadäquaten Vorgänge der bloßen Schaltkennzeichenweitergabe erheblich verschärft ist, schafft nun die Möglichkeit, mit einer etwas stärkeren Inanspruchnahme des Koppelfeldes die Belastung der zentralen Steuereinrichtung wesentlich zu senken, sowie auch die Belastung der dezentralen Steuerwerke erheblich herabzusetzen, indem statt zweier solcher Steuerwerke immer nur eines bei sogenannten Ausstiegsverbindungen mit Gebührenzählung mitzuwirken braucht; Ausstiegsverbindungen sind solche, die aus einer Zeitmultiplex-Fernmeldevermittlungsanlage in eine Raumvielfach-Fernmeldevermittlungsanlage weiterführen, wobei in der letzteren Gebührenzählimpulse erzeugt und rückwärts über den aufgebauten Verbindungsweg übertragen werden, und in der Zeitmultiplex-Fernmeldevermittlungsanlage aufgenommen und im Hinblick auf den jeweils rufenden Teilnehmer verarbeitet werden müssen.

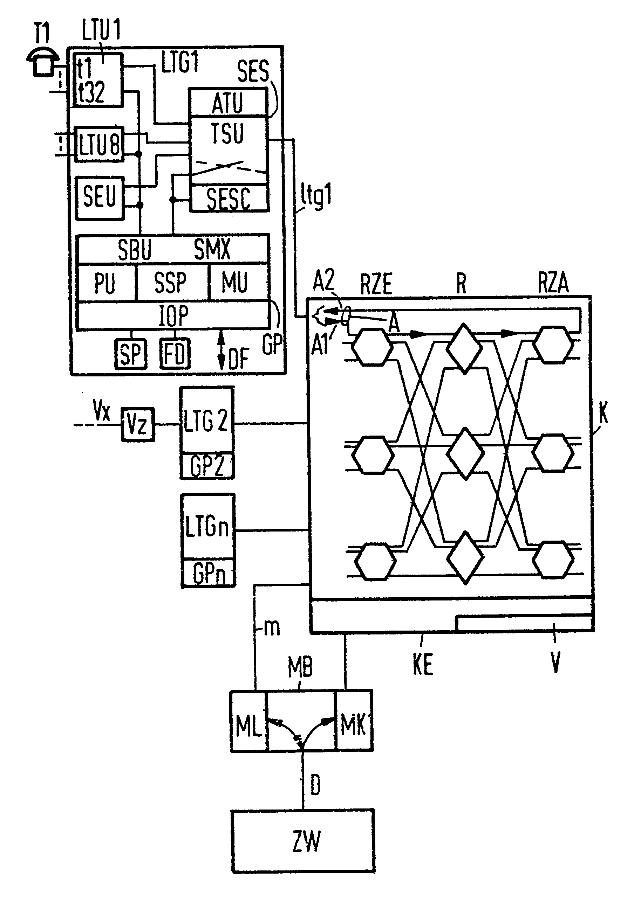

In der Zeichnung ist ein Ausführungsbeispiel der Erfindung nur in wesentlich zu ihrem Verständnis beitragenden Bestandteilen dargestellt.

Ein in drei Koppelstufen RZE, R und RZA aufgebautes Koppelfeld K weist eingangsseitig eine größere Anzahl von Koppelfeldanschlüssen auf, von denen einer dargestellt und mit A bezeichnet ist. Ein solcher Koppelfeldanschluß umfaßt immer ein Paar von Zeitmultiplexleitungen, von denen die eine Zeitmultiplexleitung zur Signalübertragung zum Koppelfeld hin und die andere Zeitmultiplexleitung zur Signalübertragung aus dem Koppelfeld heraus dient. Dementsprechend umfaßt der Koppelfeldanschluß A eine Zeitmultiplexleitung A1 und eine Zeitmultiplexleitung A2. Für jede dieser beiden Zeitmultiplexleitungen ist die jeweilige Signalübertragungseinrichtung durch entsprechende Pfeile angedeutet.

Die Koppelvielfache der ersten Koppelstufe RZE sind kombinierte Zeitlagen-Raumlagen-Vielfache, wie die dargestellten Symbole erkennen lassen. Die Koppelvielfache der mittleren Koppelstufe R sind Raumlagenvielfache. Die Koppelvielfache der letzten Koppelstufe RZA sind wieder Raumlagen-Zeitlagen-Vielfache. In jeder Koppelstufe ist eine größere Anzahl der angegebenen Vielfache vorgesehen, wenngleich pro Koppelstufe jeweils nur drei Vielfache der angegebenen Art dargestellt sind. Die Koppelvielfache der verschiedenen Koppelstufen sind untereinander über Zwischenleitungen in der aus der Zeichnung ersichtlichen Weise verbunden. Diese Zwischenleitungen sind Zeitmultiplex-Zwischenleitungen. Ebenso sind die Koppelfeldanschlüsse zeitmultiplexer Art.

An die Koppelfeldanschlüsse, z. B. A, des Koppelfeldes K sind über für jeweils beide Nachrichtenübertragungsrichtungen ausgelegte Zeitmultiplexleitungen, z. B. die Zeitmultiplexleitung ltg1, Anschlußgruppen, z. B. die Anschlußgruppe LTG1 (Line Trunk Group), einzeln angeschlossen. Eine solche Anschlußgruppe ist eingangsseitig beliebig mit Teilnehmerleitungen (analog), Analog-Verbindungsleitungen und mit PCM-Verbindungsleitungen (alternativ sowie auch in Kombination) beschaltbar. Eine über eine Teilnehmerleitung angeschlossene Teilnehmerstation ist mit T1 bezeichnet. In einer Anschlußgruppe sind Codierer, Decodierer, Multiplexer, Demultiplexer und die für eine Realisierung der sogenannten BORSCHT-Funktionen erforderlichen Einrichtungen enthalten (vgl. NTZ Bd. 33/1980, Heft 10, Seiten 646 bis 652, und 1978 International Zurich Seminar on Digital Communications, Procedings IEEE Catalogue, Nr. 78 CH 1325-0 ASST, Seiten B2.1, A4.1, auch die europäischen Patentanmeldungen EP-A1-0 056 086, veröffentlicht am 21. 7. 82, EP-A1-0 057 758, veröffentlicht am 18. 8. 82, und EP-A1-0 058 750, veröffentlicht am 1. 9. 82).

In der Zeichnung ist u. a. die Anschlußgruppe LTG1 gezeigt. Deren Aufbau und Arbeitsweise sind ausführlich in der DE-OS 2 826 113 ab Seite 6 unten beschrieben. Die weiteren Erläuterungen setzen diese Beschreibung als bekannt voraus und beschränken sich auf die im vorliegenden Falle besonders wesentlichen Zusammenhänge.

Bei den Anschlußgruppen handelt es sich um an die Anschlüsse des mehrstufigen Koppelfeldes K einzeln angeschlossene Einrichtungen (LTG), in welchen die über das Koppelfeld nach dem Zeitmultiplexprinzip durchzuschaltenden und zu jeweils einer Verbindung gehörenden beiden Kanäle mittels Zwischenspeicherung der in jeder der beiden Übertragungsrichtungen zu übertragenden Nachrichteninformationen hinsichtlich Zeittakt und Pulsrahmengrenzen Synchronität aufweisen. Hierzu ist in Zusammenhang mit der erwähnten Codierung und Decodierung und mit den Multiplexern und Demultiplexern eine Zwischenspeicherung der PCM-Informationen pro Verbindung vorgesehen. Für einen Anschluß von PCM-Verbindungsleitungen, die zu anderen Vermittlungsstellen führen oder von diesen herangeführt sind, können auch Ausgleichsspeicher zum Rahmenausgleich bezüglich der Informationsübertragung über diese PCM-Verbindungsleitungen in den Anschlußgruppen vorgesehen sein. In ihnen können also jeweils alle zum Anschluß der obengenannten Leitungen erforderlichen zuvor aufgeführten Schaltmittel oder auch nur die jeweils funktionsbedingt erforderlichen vorgesehen sein.

Ein zentrales Steuerwerk ZW dient u. a. zur Herstellung der über das Koppelfeld K aufzubauenden Nachrichtenverbindungen. Es ermittelt die für die Herstellung einer jeden Verbindung erforderlichen Vermittlungsdaten. Die Vermittlungsdaten für eine durchzuschaltende Verbindung geben bekanntlich genau den Verlauf der betreffenden Verbindung über das Koppelfeld an, also die von der Verbindung durchlaufenen Koppelvielfache und Zwischenleitungen, sowie die darin jeweils belegten Kanäle. Diese Vermittlungsdaten werden mit Hilfe des Zentralsteuerwerkes, das also u. a. auch die Funktion einer Wegesucheinrichtung nebst Belegungsspeicher ausübt, erarbeitet und zur Koppelfeldeinstelleinrichtung KE des Koppelfeldes K übertragen. Der die Vermittlungsdaten übertragende Datenfluß vom Zentralsteuerwerk ZW zur Koppelfeldeinstelleinrichtung KE verläuft über eine mit dem Zentralsteuerwerk über eine zentrale Datenleitung D verbundene Puffereinrichtung MB, die einer Zwischenspeicherung und Umcodierung von Daten sowie einer Anpassung der Übertragungsgeschwindigkeiten dient. Die Puffereinrichtung kann auf einen Teil dieser Funktionen oder auf jeweils nur eine dieser Funktionen beschränkt sein. Eine solche Puffereinrichtung ist z. B. in der DE-PS 1 537 849 (VPA 67/3047) ausführlich beschrieben.

Außer dem zentralen Steuerwerk ZW ist eine größere Anzahl von dezentralen Steuereinrichtungen TE1 bis TEn dargestellt, die jeweils den Anschlußgruppen LTG1 bis LTGn individuell zugeordnet sind. Diese Steuereinrichtungen dienen zur Durchführung sämtlicher Schaltvorgänge innerhalb jeder der genannten Anschlußgruppen. Zu diesen Schaltvorgängen gehören insbesondere sämtliche Vermittlungsvorgänge innerhalb dieser Anschlußgruppen. Weitere Einzelheiten hierüber können der bereits angegebenen DE-OS 2 826 113 entnommen werden.

Die dezentralen Steuereinrichtungen TE1 bis TEn stehen mit dem zentralen Steuerwerk ZW über Datenkanäle in Verbindung, die einzeln pro dezentrale Steuereinrichtung über das Koppelfeld K bis zur Puffereinrichtung MB durchgeschaltet sind. Von dieser Puffereinrichtung, und zwar von ihrem Datenkopf ML führt also je ein eigener Datenkanal zu jeder der dezentralen Steuereinrichtungen. Hierzu ist die Puffereinrichtung MB mit ihrem Datenkopf ML über eine Zeitmultiplexleitung m an einen der Koppelfeldanschlüsse K angeschlossen. Die Puffereinrichtung ist an einem der Koppelfeldanschlüsse des Koppelfeldes K in der gleichen Weise angeschlossen, wie jede der genannten Anschlußgruppen LTG1 bis LTGn.

Die Zeitmultiplexleitung m ist also an einen Koppelfeldanschluß angeschaltet, der einen Zeitmultiplexeingang zu einem Raumlagen-Zeitlagen-Vielfach der ersten Koppelstufe und einen Zeitmultiplexausgang von einem Raumlagen-Zeitlagen-Vielfach der letzten Koppelstufe umfaßt. Die Zeitmultiplexleitung m ist also an einen Koppelfeldanschluß wie den mit A bezeichneten angeschaltet.

Jede Datenverbindung zwischen dem Datenkopf ML der Puffereinrichtung MB und einer jeden der Anschlußgruppen, z. B. der Anschlußgruppe LTG1, umfaßt einen Kanal zur Übertragung von Daten von der Puffereinrichtung zur betreffenden Anschlußgruppe und einen weiteren Kanal zur Übertragung von Daten in der umgekehrten Richtung. Diese beiden Datenkanäle führen zu und von der der betreffenden Anschlußgruppe individuell zugeordneten dezentralen Steuereinrichtung.

Die Herstellung und die Aufrechterhaltung der erläuterten Datenverbindungen über das Koppelfeld K erfolgt mit Hilfe der Koppelfeldeinstelleinrichtung KE in der gleichen Weise wie die Herstellung und die Aufrechterhaltung von Nachrichtenverbindungen, z. B. Fernsprechverbindungen. Hierzu sind in an sich bekannter Weise den Koppelvielfachen des Koppelfeldes K Haltespeicher zugeordnet, in die die jeweils ein Koppelvielfach betreffenden Vermittlungsdaten eingespeichert werden. Mit Hilfe dieser Haltespeicher wird bewerkstelligt, daß in den jeweiligen Zeitlagen die erforderlichen Durchschaltungen zur Verfügung stehen bzw. die erforderlichen Schreibvorgänge sowie Lesevorgänge für die Vollspeicher der Zeitlagenvielfache stattfinden. Alle weiteren Einzelheiten, die Aufbau und Arbeitsweise einer Zeitmultiplexkoppelanordnung betreffen, werden hier als bekannt vorausgesetzt und deshalb nicht weiter im einzelnen beschrieben.

Wie erläutert, werden die zur Herstellung von Nachrichtenverbindungen erforderlichen Vermittlungsdaten vom Zentralsteuerwerk über die Puffereinrichtung MB zur Koppelfeldeinstelleinrichtung KE übertragen. Hierzu dient u. a. ein Datenkopf MK, der der Puffereinrichtung MB zugeordnet ist. Der Vollständigkeit halber sei an dieser Stelle hinzugefügt, daß mit einer Puffereinrichtung MB auch eine Mehrzahl von Koppelfeldeinstelleinrichtungen KE verbunden sein kann. Diese mehreren Koppelfeldeinstelleinrichtungen können einzeln mehreren Koppelfeldteilen eines größeren Koppelfeldes zugeordnet sein. Es ist auch möglich, je eine Koppelfeldeinstelleinrichtung pro Koppelstufe vorzusehen.

Da die weiter oben beschriebenen Datenverbindungen zwischen der Puffereinrichtung MB über die Zeitmultiplexleitung m zu jeder der Anschlußgruppen LTG1 bis LTGn mit Hilfe des Koppelfeldes K durchgeschaltet sein müssen, bevor der Aufbau von Nachrichtenverbindungen, z. B. Fernsprechverbindungen, begonnen werden kann, steht für die Herstellung dieser Datenverbindungen in der Regel ein völlig freies Koppelfeld zur Verfügung, also ein Koppelfeld, in dem sämtliche Kanäle unbelegt sind. Deshalb kann der Aufbau der Datenverbindungen nach einem willkürlich festgelegten Schema erfolgen, das für alle Zeiten unverändert bleibt. Deshalb ist vorgesehen, daß die Koppelfeldeinstelleinrichtung KE außerdem in einem ihr zugeordneten Speicher V Einstelldaten, d. h. also die Vermittlungsdaten, für die Datenkanäle gespeichert enthält. Diese Vermittlungsdaten brauchen also bei einem Neuaufbau der Datenverbindungen nicht jeweils vom zentralen Steuerwerk ZW neu erarbeitet zu werden und nicht über die Puffereinrichtung MB erneut übertragen zu werden. Sind die zwischen der Puffereinrichtung MB und den Anschlußgruppen LTG1 bis LTGn, d. h. ihren dezentralen Steuereinrichtungen TE1 bis TEn, erforderlichen Datenverbindungen über das Koppelfeld K neu herzustellen, so gibt das zentrale Steuerwerk ZW lediglich einen entsprechenden Befehl an die Puffereinrichtung MB ab, den sie an die Koppelfeldeinstelleinrichtung KE weitergibt, und aufgrund deren diese die in ihrem Speicher V gespeicherten Vermittlungsdaten entnimmt, um in an sich bekannter Weise die erforderlichen Vermittlungsvorgänge einzeln nacheinander auszuführen. An dieser Stelle sei erwähnt, daß eine Zeitmultiplex-Fernsprechvermittlungsanlage, wie sie auf den Seiten 8 bis 12 beschrieben ist, schon in den europäischen Anmeldungen EP-A-0 058 750, veröffentlicht am 1. 9. 82 und EP-A-0 059 242 veröffentlicht am 8. 9. 82, beschrieben udn beansprucht ist.

Nachdem die bisherige Beschreibung die erfindungsgemäß gestaltete Zeitmultiplex-Fernsprechvermittlungsanlage in allgemeineren Zusammenhängen beschrieben hat, wendet sie sich nunmehr den erfindungsgemäßen Zusammenhängen zu.

Wie in der bereits genannten DE-OS 2 826 113 erläutert ist, werden über den Zeitkanalkoppler TSU der Anschlußgruppe LTG1 außer Nachrichtenverbindungen von und zu Teilnehmerstellen sowie Verbindungsleitungen auch die bereits erwähnten Datenverbindungen zwischen den den Anschlußgruppen, z. B. LTG1, zugeordneten dezentralen Steuereinrichtungen, z. B. GP, einerseits und dem zentralen Steuerwerk ZW andererseits hergestellt. Diese Datenverbindungen verlaufen, wie bereits dargelegt, weiterhin über das Koppelfeld K und die Zeitmultiplexleitung m.

Wie bereits erwähnt, sind an die Anschlußgruppen außer Teilnehmerleitungen auch Verbindungsleitungen (Analog-Verbindungsleitungen und/oder Zeitmultiplex-Verbindungsleitungen) angeschlossen. Die Anschlußgruppen LTG2 und weitere, bis LTGn sind in der gleichen Weise ausgebildet wie die Anschlußgruppe LTG1.

Die dezentralen Steuereinrichtungen GP wirken bei der Aufnahme und Abgabe von Schaltkennzeichen bezüglich der angeschlossenen Teilnehmerleitungen und Verbindungsleitungen mit. Diesen Schaltkennzeichen entsprechende Daten werden bei über eine Teilnehmerleitung und/oder Verbindungsleitung aufzunehmenden Schaltkennzeichen gebildet und zum zentralen Steuerwerk übertragen. Für über Teilnehmerleitungen und/oder Verbindungsleitungen auszusendende Schaltkennzeichen liefert das Zentralsteuerwerk entsprechende Daten zu der betreffenden dezentralen Steuereinrichtung, welche dann die Bildung und Aussendung des betreffenden Schaltkennzeichens bewerkstelligt.

An die Anschlußgruppe LTG2 ist u. a. eine Verbindungsleitung Vx über eine Leitungsabschlußschaltung Vz angeschlossen. Hierbei handelt es sich um eine Analog-Verbindungsleitung. Sie führt zu einer Fernsprechvermittlungsanlage konventioneller Bauart. Wie bereits eingangs erläutert wurde, werden in konventionellen Fernsprechvermittlungsanlagen Schaltkennzeichen in Form von Gleichstromimpulsen übertragen. Hierbei kann es sich um das Beginnzeichen, das Schlußzeichen, um Gebührenzählimpulse, um das Wahlendekennzeichen und dergleichen handeln. In den Büchern »Landesfernwahl« und »Landesfernwahl II« von R. Führer (Verlag R. Oldenbourg, München) sind Aufbau und Arbeitsweise von konventionellen Fernsprechfernvermittlungsstellen in großer Ausführlichkeit beschrieben, ebenfalls Einrichtungen zur Aussendung von über Analog-Verbindungsleitungen weiterzugebenden Schaltkennzeichen, insbesondere von Gebührenzählimpulsen, die als Gleichstromsignale und/oder über zugleich mit den Nachrichtenwegen, z. B. Sprechstromkreisen und ebenso wie diese für eine Verbindung durchgeschaltete Strompfade übertragen werden (Vierdraht-EMD-Technik). Wird eine Verbindung von der in der Zeichnung dargestellten Fernsprechvermittlungsstelle über deren Koppelfeld K und die Analog-Verbindungsleitung Vx zu einem an eine konventionelle Fernsprechvermittlungsanlage angeschlossenen Teilnehmer hergestellt, so sind Schaltkennzeichen, die rückwärts über die Analog-Verbindungsleitung Vx übertragen werden und in der Leitungsabschlußschaltung Vz eintreffen, letztlich der dezentralen Steuereinrichtung GP der Anschlußgruppe LTG1 zuzuleiten; das ist also die dezentrale Steuereinrichtung derjenigen Anschlußgruppe, welche die mit dieser Analog-Verbindungsleitung über das Koppelfeld K verbundene Teilnehmerleitung im betrachteten Verbindungsfall zugeordnet ist.

Bei Herstellung solcher Verbindungen von einer Teilnehmerleitung (z. B. der der Teilnehmerstelle T1 zugeordneten Teilnehmerleitung) über das Koppelfeld K und eine Analog-Verbindungsleitung, z. B. Vx, sowie eine dieser zugeordnete verbindungsindividuelle Schalteinrichtung, z. B. Vz, ist vorgesehen, daß außer einem ersten Zeitmultiplex-Verbindungsweg über das Koppelfeld K zwischen der betreffenden Teilnehmerleitung und der Leitungsabschlußschaltung, welcher als Nachrichtenübertragungsweg über das Koppelfeld dient, davon unabhängig und zusätzlich von der dezentralen Steuereinrichtung GP zu derselben Leitungsabschlußschaltung Vz ein zweiter Zeitmultiplex-Verbindungsweg über das Koppelfeld K durchgeschaltet wird, welcher der Übertragung der Schaltkennzeichen dient. Über das Koppelfeld K werden also im betrachteten Verbindungsfall zwei Zeitmultiplexverbindungen hergestellt. Die eine dient als Nachrichten-Verbindungsweg von der Teilnehmerstelle T1 zu einer über die Analog-Verbindungsleitung Vx angewählten, nicht dargestellten zweiten Teilnehmerstelle; die andere dieser beiden über das Koppelfeld K durchgeschalteten Zeitmultiplexverbindungen verläuft von der dezentralen Steuereinrichtung GP der Anschlußgruppe LTG1, an die ja der rufende Teilnehmer angeschlossen ist, über den Zeitkanalkoppler TSU zur Leitungsabschlußschaltung Vz. Über diese zweite Zeitmultiplexverbindung werden alle Schaltkennzeichen zwischen der Leitungsabschlußschaltung Vz und der dezentralen Steuereinrichtung GP ausgetauscht. Hierbei kann es sich außer um Gebührenzählimpulse auch um Schaltkennzeichen jeder anderen Art handeln. Der zweite Zeitmultiplexverbindungsweg wird unabhängig von dem ersten und in der gleichen Weise wie dieser über das Koppelfeld K durchgeschaltet.

Wie ausgeführt wurde, dient die dezentrale Steuereinrichtung GP ... in jeder der Anschlußgruppen LTG ... zur Erkennung und Aufnahme von Schaltkennzeichen, die über angeschlossene Teilnehmerleitungen und/oder Verbindungsleitungen eintreffen und zu deren Weitergabe an das Zentralsteuerwerk ZW. Diese Schaltkennzeichen dienen sowohl zur Herstellung von Verbindungen über das Koppelfeld K als auch zur Weitergabe bei Ausstiegsverbindungen in der zuvor beschriebenen Weise. Das Zentralsteuerwerk ZW verarbeitet zum Teil also auch selbst solche Schaltkennzeichen, z. B. indem es mit Hilfe der Koppelfeldeinstelleinrichtung KE die Steuerung der Verbindungsherstellung über das Koppelfeld K abwickelt.

Der bei einer Herstellung von Verbindungen über das Koppelfeld K und eine Analog-Verbindungsleitung Vx über jenes zusätzlich mitaufgebaute zweite Zeitmultiplexverbindungsweg ist nicht nur zur Übertragung solcher Daten verwendbar, mit deren Hilfe Zählimpulse signalisiert werden. Sondern es können auch Schaltkennzeichen jeder anderen Art entsprechende Daten über diesen zweiten Zeitmultiplexverbindungsweg übertragen werden. Es ist vorgesehen, daß bei Aufbau einer Verbindung über das Koppelfeld K und eine Analog-Verbindungsleitung Wahlkennzeichen über den Nachrichtenverbindungsweg von der der rufenden Teilnehmerleitung entsprechenden Anschlußgruppe zugeordneten dezentralen Steuereinrichtung und nach Gesprächsbeginn alle Schaltkennzeichen über den zweiten Zeitmultiplexverbindungsweg übertragen werden. Der Nachrichtenverbindungsweg dient also vor Gesprächsbeginn zur Durchgabe solcher Daten von der dezentralen Steuereinrichtung GP zur Leitungsabschlußschaltung Vz der Analog-Verbindungsleitung Vx, welche Wahlkennzeichen signalisieren, die über die Analog-Verbindungsleitung Vx zu übertragen sind und in einer konventionellen Fernsprechvermittlungsanlage zur weiteren Verbindungsherstellung bis zum zu rufenden Teilnehmer vorgesehen sind. Erst vom Gesprächsbeginn an dient der über das Koppelfeld K durchgeschaltete zweite Zeitmultiplexverbindungsweg zur Übertragung aller weiteren Schaltkennzeichen. Dadurch ist die Möglichkeit geschaffen, den Aufbau des zweiten Zeitmultiplexverbindungsweges bei Herstellung einer Verbindung auch etwas später vornehmen zu können, wodurch sich für das diesen Aufbau abwickelnde zentrale Steuerwerk ZW eine Entlastung unter dem Gesichtspunkt der geringeren zeitlichen Dringlichkeit für die Herstellung dieser zweiten Zeitmultiplexverbindung ergibt.

Weiterhin ist vorgesehen, daß das den Beginn einer Gesprächsverbindung anzeigende sogenannte Beginnzeichen sowohl über den Nachrichtenverbindungsweg als auch über den zweiten Zeitmultiplexverbindungsweg signalisiert wird. Hierzu werden also entsprechende Daten über die beiden Wege über das Koppelfeld übertragen. Über den Nachrichtenverbindungsweg wird also als letztes Schaltkennzeichen das Beginnzeichen signalisiert, welches über den zweiten Zeitmultiplexverbindungsweg als erstes Schaltkennzeichen signalisiert wird. Dadurch wird erreicht, daß bei der Verbindungsherstellung die volle Funktionsfähigkeit sowohl des Nachrichtenverbindungsweges als auch des zweiten Zeitmultiplexverbindungsweges überprüft werden. Eine gesonderte Prüfung dieser Wege ist nicht erforderlich. Es besteht auch die Möglichkeit, diese Prüfung bei Herstellung jeglicher anderer Verbindungen über das Koppelfeld K vorzunehmen, also auch bei Internverbindungen innerhalb der in der Zeichnung dargestellten Zeitmultiplex-Fernsprechvermittlungsanlage.

## Patentansprüche

1. Schaltungsanordnung für zentralgesteuerte Zeitmultiplex-Fernmeldevermittlungsanlagen, insbesondere PCM-Fernsprechvermittlungsanlagen, mit einem mehrstufigen, Zeitmultiplex-Eingänge und Zeitmultiplex-Ausgänge aufweisenden Koppelfeld (K) und mit einer Mehrzahl von einem Anschluß von Zeitmultiplex-Verbindungsleitungen, Analog-Verbindungsleitungen und/oder Analog-Teilnehmerleitungen (z. B. T1) dienenden Anschlußeinrichtungen (LTG1, LTG2, . . . LTGn), von denen jede an einen Zeitmultiplexeingang (A1) und einen Zeitmultiplexausgang (A2) des Koppelfeldes (K) angeschlossen ist, und mit wenigstens einem zentralen Steuerwerk (ZW) und mehreren, den Anschlußeinrichtungen (LTG1, LTG2, . . . LTGn) individuell zugeordneten dezentralen Steuereinrichtungen (GP, GP2, . . . GPn), die mit dem Steuerwerk (ZW) über Datenkanäle (über z. B. Ltg1, K, m, MB, D) in Verbindung stehen, und mit Einrichtungen zur Aussendung von über Analog-Verbindungsleitungen (Vx) weiterzugebende Schaltkennzeichen, insbesondere von Gebührenzählimpulsen, die als Gleichstromsignale über zugleich mit den Nachrichtenwegen, z. B. Sprechstromkreisen, und ebenso wie diese für eine Verbindung durchgeschaltete Strompfade übertragen werden, und die bei über das Koppelfeld (K) und jeweils eine Analog-Verbindungsleitung (Vx) verlaufenden Verbindungen der dezentralen Steuereinrichtung (GP, GP2, . . . GPn) derjenigen Anschlußgruppe (LTG1, LTG2, . . . LTGn) zugeleitet werden, welcher die mit dieser Analog-Verbindungsleitung (Vx) über das Koppelfeld (K) verbundene Teilnehmerleitung (T1) oder Verbindungsleitung — zugeordnet ist, dadurch gekennzeichnet, daß bei Herstellung von Verbindungen von einer Teilnehmerleitung (z. B. T1) — oder Verbindungsleitung — über das Koppelfeld (K) und jeweils eine Analog-Verbindungsleitung (Vx) sowie eine dieser zugeordnete verbindungsindividuelle Schalteinrichtung, z. B. Leitungsabschlußschaltung (Vz), außer einem ersten Zeitmultiplexverbindungsweg über das Koppelfeld (K) zwischen der Teilnehmerleitung (z. B. T1) — oder Verbindungsleitung — und der verbindungsindividuellen Schalteinrichtung (Vz), der als Nachrichtenübertragungsweg über das Koppelfeld (K) dient, davon unabhängig und zusätzlich von der dezentralen Steuereinrichtung (GP, GP2, . . . GPn) derjenigen Anschlußgruppe (LTG1, LTG2, . . . LTGn), welcher die betreffende Teilnehmerleitung (z. B. T1) — oder Verbindungsleitung — angehört, zu derselben verbindungsindividuellen Schalteinrichtung (Vx) ein zweiter Zeitmultiplexverbindungsweg über das Koppelfeld (K) durchgeschaltet wird, welcher der Übertragung der Schaltkennzeichen dient.

2. Schaltungsanordnung nach Anspruch 1, dadurch gekennzeichnet, daß der zweite Zeitmultiplexverbindungsweg unabhängig von dem ersten und in der gleichen Weise wie dieser über das Koppelfeld (K) durchgeschaltet wird.

3. Schaltungsanordnung nach Anspruch 1, dadurch gekennzeichnet, daß bei Aufbau einer Verbindung über das Koppelfeld (K) und über eine Analog-Verbindungsleitung (Vx) Wahlkennzeichen über den Nachrichtenübertragungsweg von der der rufenden Teilnehmerleitung (T1) entsprechenden Anschlußgruppe (z. B. LTG1) zugeordneten dezentralen Steuereinrichtung (z. B. GP) und nach Gesprächsbeginn alle Schaltkennzeichen über den zweiten Zeitmultiplexverbindungsweg übertragen werden.

4. Schaltungsanordnung nach Anspruch 3, dadurch gekennzeichnet, daß das den Beginn einer Gesprächsverbindung anzeigende Beginnzeichen sowohl über den Nachrichtenübertragungsweg als auch über den zweiten Zeitmultiplexverbindungsweg übertragen wird.

## Claims

1. A circuit arrangement for centrally controlled t.d.m. telecommunications exchange systems, in particular PCM telephone exchange systems, with a multi-stage switching network (K) which has t.d.m. inputs and t.d.m outputs, and with a plurality of peripheral devices (LTG1, LTG2 . . . LTGn) which serve to connect t.d.m. connection lines, analogue connection lines and/or analogue subscriber lines (e.g. T1), and each of which is connected to a t.d.m. input (A1) and a t.d.m. output (A2) of the switching network (K), and with at least one central control unit (ZW) and a plurality of decentral control devices (GP, GP2 . . . GPn) which are individually assigned to the peripheral devices (LTG1, LTG2 . . . LTGn) and which are connected to the control unit (ZW) via data channels (via e.g. LTG1, K, m, MB, D), and with devices which serve to transmit switching characteristics which are to be forwarded via analogue connection lines (Vx), in particular charge metering pulses, which are transmitted as d.c. signals via current paths which are switched through for a connection simultaneously to and in the same way as the communications paths, e.g. speech circuits, and wich, in the case of connections of the decentral control device (GP, GP2 . . . GPn) which each extend via an analogue connection line (Vx), are fed to that peripheral group (LTG1, LTG2 . . . LTGn) which is assigned the subscriber line (T1) or connection line which is connected to this analogue connection line (Vx) via the switching network (K), characterised in that in the establishment of connections from a subscriber line (e.g. T1) — or connection line — via the switching network (K) and in each case via an analogue connection line (Vx) and via a connection-individual switching device assigned thereto, e.g. a line terminating circuit (Vz), in addition to a first t.d.m. connection path through the switching network (K) between the subscriber line (e.g. T1) — or connection line — and the connection-individual switching device (Vz), which connection path serves as communication transmission path via the switching network (K), independently thereof and in addition thereto, from the decentral control device (GP, GP2 ... GPn) of that peripheral group (LTG1, LTG2 ... LTGn) which is assigned the relevant subscriber line (e.g. T1) — or connection line, to the same connection-individual switching device (Vx) a second t.d.m. connection path is switched through via the switching network (K) and this second t.d.m. connection path serves for the transmission of the switching characteristics.

2. A circuit arrangement as claimed in claim 1, characterised in that the second t.d.m. connection path is switched through via the switching network (K) independently of and in the same way as the first t.d.m. connection path.

3. A circuit arrangement as claimed in claim 1, characterised in that when a connection is established via the switching network (K) and via an analogue connection line (Vx), dialled characteristics are transmitted via the communications transmission path from the decentral control device (e.g. GP) which is assigned th that peripheral group (e.g. LTG1) which corresponds to the calling subscriber line (T1), and following the beginning of the conversation all the switching characteristics are transmitted via the second t.d.m. connection path.

4. A circuit arrangement as claimed in claim 3, characterised in that the start characteristic which indicates the beginning of a conversation connection is transmitted both via the communications transmission path and also via the second t.d.m. connection path.

**Revendications**

1. Montage pour des installations de télécomunications à multiplexage temporel, à commande centrale, notamment des installations de téléphonie MIC, comportant un champ de couplage K à plusieurs étages possédant des entrées de multiplexage temporel et des sorties de multiplexage temporel, et comportant une multiplicité de dispositifs de jonction (LTG1, LTG2, ... LTGn), qui servent à réaliser une jonction de lignes de liaison à multiplexage temporel, de lignes de jonction analogiques et/ou de lignes d'abonnés analogiques (par exemple T1) et dont chacune est raccordée à une entrée (A1) de multiplexage temporel et à une sortie (A2) de multiplexage temporel du champ de couplage, et comportant au moins une unité de commande centrale (ZW) et plusieurs dispositifs de commande décentralisés (GP, GP2, ... GPn) associés individuellement aux dipositifs de jonction (LTG1, LTG2, ... LTGn) et qui sont reliés à l'unité de commande (ZW) par l'intermédiaire de canaux de transmission de données (par l'intermédiaire par exemple de Ltg1, K, m, MB, D), et comportant des dispositifs servant à émettre des signaux caractéristiques de commutation devant être retransmis par l'intermédiaire de lignes de jonction analogiques (Vx), notamment des impulsions de taxation, qui sont transmises sous la forme de signaux à courant continu et/ou l'intermédaire de voies de courant interconnectées pour une liaison en même temps que les voies de transmission d'informations, par exemple des circuits téléphoniques, et ce tout comme ces voies, et qui, dans le cas de liaisons s'effectuant par l'intermédiaire du champ de couplage (K) et respectivement d'une liaison analogique (Vx), du dispositif décentralisé de commande (GP, GP2, ... GPn), sont envoyés au module de liaison (LTG1, LTG2, ... LTGn) auquel est associée la ligne d'abonné (T1) — ou la ligne de liaison — reliée à cette ligne de jonction analogique (Vx) par l'intermédiaire du champ de couplage (K), caractérisé par le fait que, lors de l'établissement de liaisons par une ligne d'abonné (par exemple T1) — ou une ligne de jonction — par l'intermédiaire du champ de couplage (K) et respectivement d'une ligne de jonction analogique (Vx) ainsi qu'un dispositif de commutation, prévu individuellement pour chaque liaison et associé à cette ligne, par exemple un circuit de terminaison de ligne (VZ), en-dehors d'une première voie de jonction à multiplexage temporel s'étendant, en passant par le champ de couplage (K), entre la ligne d'abonné (par exemple T1) — ou une ligne de jonction — et le dispositif de commutation (Vx) prévu individuellement pour la liaison et qui sert de voie de transmission d'informations passant par le champ de couplage (K), une seconde voie de liaison à multiplexage temporel, qui sert à la transmission des signaux caractéristiques de commutation, est interconnectée par l'intermédiaire du champ de couplage (K), au même dispositif de commutation (Vx) prévu individuellement pour chaque liaison, indépendamment de la première voie de jonction à multiplexage temporel et en supplément du dispositif de commande décentralisé (GP, GP2, ... GPn) du groupe de jonction (LTG1, LTG2, ... LTGn), à laquelle est associée la ligne d'abonné (par exemple T1) — ou la ligne de jonction concernée.

2. Montage suivant la revendication 1, caractérisé par le fait que la seconde voie de liaison à multiplexage temporel est interconnectée indépendamment de la première voie de liaison à multiplexage temporel et de la même manière que cette dernière, par l'intermédiaire du champ de couplage (K).

3. Montage suivant la revendication 1, caractérisé par le fait que, lors de l'établissement d'une liaison par l'intermédiaire du champ de couplage (K) et par l'intermédiaire d'une ligne de jonction analogique (Vx), des signaux caractéristiques de sélection sont transmis par l'intermédiaire de la voie de transmission d'informations par le dispositif de commande décentralisé (par exemple VP) associé au groupe de jonction (par exemple LTG1) correspondant à la ligne d'abonné appelant (T1), et qu'après le début de la conversation, tous les signaux caractéristiques de commutation sont transmis par l'intermédiaire de la seconde voie de liaison à multiplexage temporel.

4. Montage suivant la revendication 3, caractérisé par le fait que le caractère de départ indiquant le début d'une liaison téléphonique, est transmis aussi bien par l'intermédiaire de la voie de transmission d'informations que par l'intermédiaire de la seconde voie de jonction à multiplexage temporel.